# EUROPEAN PATENT APPLICATION

(11) **EP 4 789 746 A1**
(43) Date of publication of application: **12.08.2026**
(21) Application number: 25156296.3
(22) Date of filing: 06.02.2025
(51) Int. Cl.: B01D 29/15, B01D 35/153

(54) **FLUID FILTER CARTRIDGE WITH A VALVE**

(71) Applicant: Hengst SE, 48147 Münster (DE)
(72) Inventor: ARDES, Wilhelm, 59387 Ascheberg (DE); Holwitt, Timo, 49080 Osnabrück (DE)
(74) Representative: Lohr, Jöstingmeier & Partner Patent- und Rechtsanwälte mbB

(57) **Abstract**

A filter cartridge 10 for a fluid filter housing 100 with a filter element 30 sandwiched between a first-end plate 20 and a second-end plate 40 with a valve comprising a valve opening 55 and a valve member 60 enables to test the prior to installation of the filter cartridge 10 while at the same time to reduce the pressure drop across the valve, if the filter cartridge 10 further comprises a cartridge-support ring 50 spaced from the first-end plate 20, thereby defining a gap 54 which is the valve opening 55f.

## Description

### Field of invention

The invention relates to a filter cartridge configured for being removably inserted into a fluid filter housing. The filter cartridge may comprise at least one of a first-end plate, a second-end plate, a valve and a filter element. The filter element is preferably sandwiched between the first-end plate and the second-end plate. The filter element may surround a first fluid channel. The first fluid channel may have a channel axis, as well referred to as filter axis or longitudinal axis. The valve may have a valve opening, a valve member and a valve seat. The first-end plate may have a peripheral surface.

### Description of the related art

A very demanding application of fluid filtering is oil filtering in combustion engines or other machinery. A typical modern oil filter system comprises an oil filter housing and a replaceable oil filter cartridge. The oil filter housing has a socket configured to be connected to the oil filter cartridge, and a removable oil filter housing cover holding the oil filter cartridge in place and providing a flow path for the oil to the peripheral surface of the filter element, from where it flows antiradially inwards through the filter element into the above-mentioned fluid channel. From the filter channel, the filtered oil can be withdrawn via a corresponding outlet of the socket, which is in fluid communication with the filter channel.

Check valves in an oil filter system may be used to ensure that the oil does not flow backwards if the oil pump is shut off, i.e. that the filtered oil is available at the corresponding oil outlets in a machine once the oil pump is driven. It has been suggested to integrate such check valves into the socket, but this increases the maintenance demand of the socket and hence operating costs. It has also been suggested to integrate check valves into an oil filter cartridge (see e.g. EP 1 693 096 A2), to thereby ensure these check valves are replaced on a regular basis. But this increases the manufacturing costs of the filter cartridge and in many applications the flow resistance of the filter system.

Fluid filter systems may further comprise a bypass valve. If the pressure drop, across the filter element is above given pressure threshold, the bypass valve opens a bypass to the filter element. Such bypass valves can be considered as pressure relief valves and in an oil filter system they can ensure that sufficient oil circulates through the engine, even if the filter element is clogged. Catastrophic engine failures can be prevented or at least delayed. An example for a bypass valve is disclosed in WO 2006/120242 A2. The bypass path is provided by bypass openings in a peripheral surface of a circular cylindric conduit. During normal operation an elastic hose being located on the clean inner side of the conduit maintains the bypass path closed. If the pressure gradient between the outer side of the conduit and the inner side of the conduit exceeds a threshold, the elastic hose is compressed radially by the pressure and the fluid may flow through the bypass openings into the conduit.

### Summary of the invention

The problem to be solved by the invention is to provide a fluid filter cartridge (hereinafter briefly *"filter cartridge"* or simply *"cartridge"*) with an integrated valve that reliably prevents a fluid backflow (backflow prevention valve) or opens a bypass path if a pressure threshold is exceeded (bypass valve), that is easy to manufacture, has low space requirements and a low flow resistance for a given fluid flow rate. In addition, the operation of the valve should be testable prior to installing the filter cartridge.

A solution to the problem is provided by the filter cartridge of claim 1. The dependent claims relate to further improvements of the invention.

The filter cartridge may be configured for being removably inserted into a fluid filter housing. A filter cartridge that reached the end of its service life can preferably be removed from the filter housing and can be replaced by a new one. To insert the filter cartridge into the housing, a housing cover may be opened, subsequently an optionally already installed filter cartridge can be removed from the housing socket and/or the housing cover and subsequently a new filter cartridge may be attached to the housing socket and/or inserted into the housing cover. Next, the housing cover may be releasably attached to the housing socket and the replacement of the filter cartridge may be considered completed. At least two of the housing socket, the housing cover and the filter cartridge can be provided as a kit and if the filter cartridge is installed in the fluid filter housing, the filter cartridge and the fluid filter housing may form a fluid filter system.

The filter cartridge may be, e.g., an oil filter cartridge, and the fluid filter housing may be an oil filter housing. The two may be provided as an oil filter kit that forms an oil filter system, once the oil filter cartridge has been installed in the oil filter housing.

The filter cartridge may comprise at least one of a first-end plate, a second-end plate, at least one valve and a filter element. The valve can be a check valve, and may be configured as backflow prevention valve or as a bypass valve. As explained below in more detail, in a preferred example, the filter cartridge may preferably comprise two valves. In the latter case one of the two valves may be configured as a backflow prevention valve and the other of the two valves may be configured as bypass valve or vice versa. Below, the invention is described with reference to a single valve, unless explicitly mentioned. The single valve can be configured as a backflow prevention valve or as bypass valve. As already explained, the cartridge may as well have to valves, one of which may be configured as backflow prevention valve and the other as a bypass valve. The description of the one valve can thus be read on an optional second valve as well, unless differences are explicitly pointed identified.

Further, understanding of this description is simplified when assuming that the first-end plate is a front-end plate and that the second-end plate is a rear-end plate. In the present case, this orientation is not mandatory, but preferred. As usual in the present technical field, the front end of a filter cartridge is the end configured to face to the housing socket when be being mounted and the rear end of a filter cartridge is the end configured to face away from the housing socket, when installed. The front-end plate may hence be assumed to be configured to be attached to the front- end facing side (i.e. to the housing socket facing side) of the filter element and the rear-end plate may be assumed to be configured to be attached to the opposite side of the filter element.

As already indicated, the filter element may be sandwiched between the first-end plate and the second-end plate. As usual in the art, *"sandwiched in between"* means in this context that that a first end of the filter element is attached to the second-end plate facing side of the first-end plate and that the second end of the filter element is attached to the first-end plate facing side of the second-end plate. In this sense, the filter element can be considered to be located preferably directly in between the first-end plate and the second-end plate, at least if an optional glue or other attachment means for attaching the first-end plate and/or the second-end plate to the filter element is not taken into account.

The filter element may at least partially surround a first fluid channel, e.g,. fully surround the first fluid channel. The first fluid channel may define a preferably straight longitudinal axis, which is herein assumed to define the filter axis. Terms like (anti)radially, azimuthally, etc. as usual reference as well herein to the filter axis unless elsewise specified. Only to avoid misunderstandings, the antiradial direction *r̅ₐ* is, as the name implies, opposite to the radial unit vector *̅r̅*̅, i.e. *r̅ₐ* = -*̅r̅*̅.

In particular in the example in which the filter element at least partially surrounds a first fluid channel, the filter element may be a hollow (at least essentially) cylindrical structure, e.g. of a plied filter paper or another filtering material. At this point, it is noted that a cylinder is not necessarily circular, but it may be. For the definition of a cylinder, we may reference to Bronshtein, Semedyayev, Musiol Muehlig: Handbook of Mathematics, 5th edition, Springer Berlin Heidelberg New York, ISBN 978-3-540-72121-5, Section 3.3.4. Only for conceptual simplicity, it may be assumed that the hollow cylinder is a hollow right circular cylinder, but this is not required. The cylinder axis may be assumed to be the longitudinal axis of the filter cartridge, which is as well referred to as the filter axis. In other words, in a preferred example, the longitudinal axis of the first fluid channel and the filter element's axis coincide. In this sense, the filter element can be considered as a hollow cylinder, wherein the first fluid channel may be the hollow portion of the cylinder. A support structure may be positioned inside the hollow portion to bear antiradial loads on the filter element. For example in such examples, the first fluid channel is not necessarily cylindrical.

In operation, a fluid to be filtered may be provided from an inlet of the fluid filter housing (e.g. via an optional first duct of the fluid filter housing) to the volume between the filter element and the housing cover. From there, the fluid may flow through the filter element, is thereby filtered, and enters the fluid channel from where it can be withdrawn from the fluid-filter cartridge. This is the preferred flow sequence, which may as well be referred to as preferred flow direction, even if it is not a direction in strict sense.

The fluid channel may be in fluid communication with a fluid outlet of the fluid filter housing, e.g., via a second duct of the fluid filter housing. Of course, the fluid flow could be inverted, i.e. fluid to be filtered may be provided to the fluid channel, flows through the filter element (e.g. radially outwards) and the filtered fluid may be withdrawn from volume between the filter element and the housing cover, preferably as well via a housing socket (as well *socket,* for short). Only to keep the description more vivid, the first duct may as well be referred to as inlet duct and the second duct may be referred to as outlet duct. But of course, the flow direction could be inverted, and the terms inlet duct and outlet duct assume the above described preferred "preferred flow direction", which is not mandatory.

The valve may comprise a valve opening and a valve member. The valve member may be movable between an "open position" and a "closed position". Movable between means that the valve member can be moved from the open position into the closed position and as well from the closed position into the open position. In the closed position, the valve member may close the valve opening and in the open position of the valve member, the valve opening may be open, i.e. allow for a fluid flow. In other words, in the open position of the valve member it releases the valve opening. Assuming there are two valves, the first valve of the two valves may comprise a first valve opening and a first valve member; the second valve of the two valves may comprise a second valve opening and a second valve member.

For example, in the closed position, the first and/or second valve member may contact an optional first and/or second valve seat, or a first portion of the first and/or second valve member may contact a second portion of the first and/or second valve member as will be explained below, with reference to a first flap of the first and/or second valve member and a second flap of the first and/or second valve member. In other words The first flap and the second flap may be comprised by the first and/or second valve member. In this second example, the first portion of the first and/or second valve member may be considered as the first and/or second valve seat for the second portion of the first and/or second valve member and the second portion of the first and/or second valve member may be considered as the first and/or second valve seat for the first portion of the first and/or second valve member. In any of these configurations, the first and/or second valve opening may hence be closed by moving the respective valve member from an open position into the closed position.

To ease reading, when referencing to a valve member or a valve opening or a valve seat it shall be implied that it can be the "first and/or second valve member", the "first and/or second valve opening" and the "first and/or second a valve seat", respectively. In other words, below "first and/or second" is omitted for simplicity only and may be inserted if required.

In the open position, the valve member may be retracted from the valve seat and/or the first portion and the second portion of the valve member may be separated from each other. In both cases, the valve opening may thus be released, i.e. the valve may be opened by moving the valve member from the closed position into the open position. In other words, releasing the valve opening allows a fluid flow through the valve opening. In a preferred example, the valve member may be biased towards its closed position.

As usual, the valve may have preferred flow direction, i.e. the valve may be configured to allow a fluid flow through the valve opening in the preferred flow direction and to block a fluid flow in the opposite direction, wherein the opposite direction is opposite to the preferred flow direction. In these embodiments, the valve is a check valve. In yet other words, the valve may be configured such that by a pressure drop across the valve in the preferred flow direction, the pressure drop shifts the valve member into its open position and in case of a pressure drop against the preferred flow direction, the pressure drop across the valve shifts the valve member into its closed position. As usual, the fluid flows towards a lower pressure (i.e. in the direction of the pressure drop), but if the pressure drops against the preferred flow direction, the pressure difference across the valve closes the valve opening by shifting the valve member into its closed position.

Preferably, the valve member may be located at the downstream side (with reference to the preferred flow direction) of the valve opening. Thereby, a fluid flow opposite to the preferred flow direction may shift the valve member into its closed position. The valve member thus blocks the fluid flow. However, a pressure gradient associated with a fluid flow in the preferred flow direction may move the valve member into the open position. In this case the valve is open, and the fluid may flow through the valve opening.

In a particular preferred example, the filter cartridge may further comprise a first and/or a second cartridge-support ring. To ease reading, when referencing to the "cartridge support ring" it shall be implied that it can be the "first and/or second cartridge support ring".

The cartridge support ring may provide two functions: First, the cartridge-support ring may be spaced from the corresponding end plate (it may be attached to) and may preferably thereby define the valve opening. In other words, the valve opening may be a gap between the cartridge-support ring and the the respective end plate. In an alternative, the valve opening may be an opening in the cartridge support ring. For example, the gap may be a ring gap, or one or more segments of a ring gap as will be explained below. Thus, the valve opening may be located between the cartridge-support ring and the respective end plate. Second, the cartridge-support ring may allow to define a radial position of the end plate in the filter housing (e.g. radially and/or axially) and in this sense the at least one cartridge-support ring contributes to supporting the filter cartridge in the filter housing (after assembly of the filter system). In other words, the cartridge-support ring may have at least one abutment surface. If the abutment surface is an abutment surface of a first cartridge-support ring, it is the first abutment surface; if it is the abutment surface of the second cartridge support ring, it is the second abutment surface. Unless required "first" and "second" will be omitted for linguistic simplicity, but can be inserted as required. The abutment surface (i.e. the first and/or second abutment surface(s)) may be configured to rest on an inner surface of a fluid filter housing. The portion of the abutment surface configured to rest on the inner surface of the fluid filter housing may be configured to provide a gasket and is herein referred to as (first and/or second) gasket portion of the cartridge support ring. In other words, the gasket portion may be configured to sealingly contact an inner surface of a filter housing.

If the gasket portion is an abutment surface of a first cartridge-support ring it is the first gasket portion and if the gasket portion is an abutment surface of the second cartridge-support ring it is the second gasket portion. Unless required "first" and "second" will be omitted for linguistic simplicity, but can be inserted as required. The same convention is used below for other items and features and will be indicated by placing "(first and/or second)" in front of the respective item or feature. In other words, if the item or feature is an item or a feature of a first cartridge-support ring it is the first item or the first feature and if it is an item or a feature of the second cartridge support ring it is the second item or the second feature, respectively, even if "first and/or second" is omitted. The same holds for the first and second end plates. It is assumed that the first cartridge support ring is attached to the first end plate, e.g. by at least one first spacer. It may further be assumed that the second cartridge support ring may be attached to the second-end plate, e.g. by at least one second spacer, even without reiterating "first and/or second" on each occurrence.

For example, the gasket portion may radially surround a (first and/or second) peripheral surface of a (first and/or second) support element of the cartridge-support ring. Preferably, the support element may be attached via at least one (first and/or second) spacer to the corresponding (first and/or second) end plate. In other words, the gasket portion may be attached via the support element and at least one spacer to the end plate. This provides a particularly stable while fluid tight support of the filter element in a filter housing, once mounted and the end plate - cartridge-support ring assembly can be manufactured a low costs by injection molding.

The gasket portion may be of a different (preferably elastic) material than the support element. The support element of the cartridge-support ring may be made of (e.g. comprise) stiffer material than the gasket portion. In a preferred example, the valve member may be unitary with the gasket portion, which further reduces manufacturing costs and in addition provides for a particularly reliable connection between the support element, the gasket portion and the valve member, while reducing the volume of the material being required to manufacture the filter cartridge. Such valve can be manufactured at low costs, allows for a low flow resistance and has a particularly long service life.

Further, the cartridge-support ring may define together with the corresponding end plate the valve opening. Thus, the boundaries of the valve opening as well as the valve member may be a part of the filter cartridge. Therefore, the entire valve can be tested prior to installation of the filter cartridge. For example, the valve opening may be delimited by a peripheral surface of the first-end plate and a first-end plate facing surface area of the cartridge-support ring and/or by an axially facing surface of the first-end plate and a first-end plate facing surface area of the cartridge-support ring. The axially facing surface may be the surface facing towards the filter element or the axially facing surface facing away from the filter element. The first-end plate facing surface area of the cartridge-support ring in any case faces toward the corresponding counterpart.

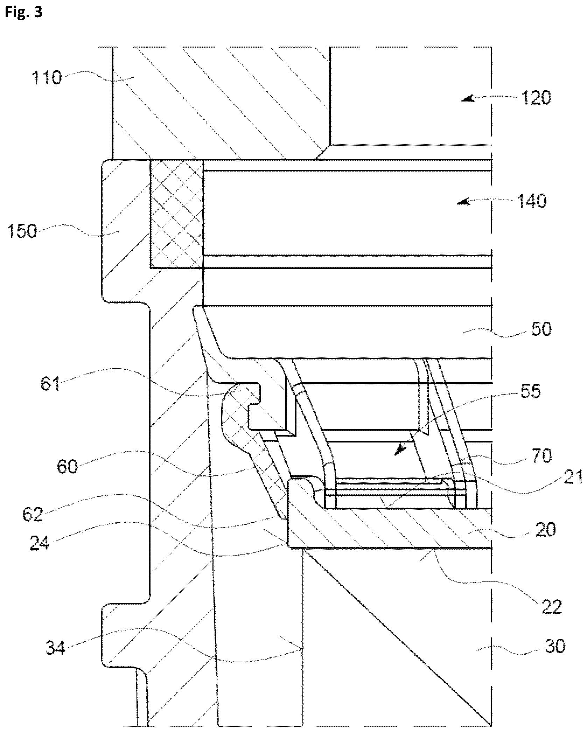

Only to avoid any ambiguities, herein, the body of the cartridge-support ring is described by its shell surface. The body of the cartridge-support ring may be hollow or not. Only for conceptual simplicity, it is assumed that the cartridge-support ring is a closed ring. This is a preferred example, but this is not required. The cartridge-support ring may as well be only a ring segment, or a number of ring segments. The ring can be a circular ring but does not need to. It can as well be polygonal, oval, combinations of corresponding ring sections, etc.. Generally, any surface of a closed loop-structure may be considered as a ring. In a less vivid but potentially more precise language: Herein, a surface is considered to be a "ring" if it is homeomorph to a (ring) torus surface wherein as usual in the field of engineering a (ring) torus is obtained by a revolution of a circle around an axis which is in the plane of the circle but does not intersect it (see Bronshtein, Semedyayev, Musiol Muehlig: Handbook of Mathematics, 5th edition, Springer Berlin Heidelberg New York, ISBN 978-3-540-72121-5: Section 3.3.4, item 16, Fig. 3.79) and two surfaces M, N are homeomorph if there exists a homeomorphism *h: M* → *N,* i.e. h is bijective, h and its inverse *h*⁻¹are continuous, (ibid, section 17.1.2.6).

The valve member may comprise one or more movable flaps which may be considered as examples of said first and/or second portions of the valve member, i.e. in case there is a first valve member the first valve member may have first and/or second portions and in case there is a second valve member it may have have first and/or second portions, as well. These movable flaps may hence each have an open position and a closed position and are movable between the open position and the closed position. For example, a movable flap may be attached to the first-end plate and may be referred to as the "first flap of the first valve member"and a movable flap attached to the second-end plate may be referred to as the first flap of the second valve member. Alternatively or in addition, a movable flap may be attached to the first cartridge-support ring and may be referred to as "second flap of the first valve member" and/or a movable flap may be attached to the second cartridge-support ring and may be referred to as "second flap of the second valve member". In all alternatives (first flap only, second flap only, both first flap and second flap are present) the at least one flap may preferably be located at the downstream side of the corresponding valve opening. As usual, downstream side references to the preferred flow direction of the valve. With reference to the radial position of the end plate and the cartridge-support ring and hence the attachment position of the first flap and the second flap of the respective valve member, these may as well be referred to as inner flap (being the first flap) and outer flap (being the second flap) of the respective valve member. If herein simply "flap" is used it may be replaced by "the first flap and/or the second flap of the first and/or second valve member". The terminology "second flap of the respective valve member" and "first flap of the respective valve member" does not imply that the radial distance of the second flap of the respective valve member to the filter axis greater than the radial distance of the first flap of the same valve member to the filter axis, but is a preferred example.

The optional first flap may have a first end being attached to the end plate and a second end of the first flap may contact the cartridge-support ring, if it is in its closed position. In this variant, the cartridge-support ring may comprise a valve seat and in the closed position the first flap may (preferably sealingly) contact the valve seat and thereby close the valve opening, while in the open position the first flap may be retracted from the valve seat and hence enable a fluid flow through the valve opening. Relevant is only that the in closed position, the valve member closes the valve opening, e.g. because one of the two ends (first end and second end) of the valve member contacts the cartridge-support ring and the other end contacts the first-end plate, at (least essentially) sealingly, whereas in the open position the second end(s) is(are) retracted from its(their) counterpart(s) and thereby release the valve opening. Following this scheme, the first end of the first flap may as well be referred to as attached end of the first flap and the second end of the first flap may as well be referred to as free end of the first flap.

Likewise, the second flap may have a first end and a second end. The first end of the second flap may be attached to the cartridge-support ring. In a preferred example, the first end of the valve member may be attached to the optional gasket portion of the cartridge-support ring. The second end of the second flap may contact the first-end plate, when in the closed position. In this example, the first-end plate may comprise a valve seat and in the closed position the second flap may (preferably sealingly) contact the valve seat and thereby close the valve opening. Whereas in the open position of the valve member, the second flap may be retracted from the valve seat and hence enable a fluid flow through the valve opening. The first end of the second flap may as well be referred to as attached end of the second flap and the second end of the second flap may as well be referred to as free end of the second flap.

In either case, only in the open positions of the respective flaps, the valve opening is released, and a fluid can flow through the valve opening. In the closed position of the valve member and hence of the flap/s, the valve member (preferably sealingly) contacts a valve seat which may be provided by a valve seat surface of the first-end plate and/or the cartridge-support ring.

In case that at least one first flap is attached to the first-end plate and at least one second flap is attached to the cartridge-support ring, the at least two second ends of the first flap and the second flap may (preferably sealingly) contact each other in their closed positions. So to speak, the two portions of the valve member mutually provide each other a valve seat. In other words, in this case the second ends of the first flap and of the second flap mutually provide each other a valve seat. By retracting the flaps from each other the valve opening is released.

In summary and only to avoid any misunderstandings, if the movable flap is attached to the first-end plate it is referred to as first flap and the valve seat may be provided (at least in part) by the cartridge-support ring. If the movable flap is attached to the cartridge-support ring it is referred to as a second flap and the valve seat may be provided (at least in part) by the first-end plate. Further, if the second flap and the first flap are present, then they may mutually provide a valve seat for the respective other flap.

The valve as explained above (in all three examples) has a number of advantages: It is simple (=cost-effective) and reliable, it can be positioned such that the required volume for the filter system is not increased and further allows for a very low pressure drop, i.a. due to the large cross-sectional area of the valve opening. Accordingly, the energy consumption for filtering the fluid is reduced. Only to make it more vivid, the valve opening may extend at least essentially circumferentially around the filter axis thereby allowing for a large cross-sectional area of the valve opening for a given (e.g. radial) movement of the valve member/s. For example, the valve opening may be provided by number of ring sections that jointly span at least 270°. The angle *β* indicating the cumulated azimuthal extension of the valve opening may preferably be greater or equal to *βₘᵢₙ*, i.e. *β* ≥ *βₘᵢₙ*, wherein *βₘᵢₙ* ∈ {270°, 280°, 290°, 300°, 310°, 320°, 330°, 340°, 350°}

The outer flap and/or the first flap may as well be a ring and or comprise at least one ring segment. The first end(s) of the second flap and/or the first flap may be movably attached to the cartridge-support ring or the first-end plate and/or made of an elastic material such as rubber or another elastomer allowing the second end of the movable flap to be bent towards the open position. This keeps production costs low and enhances reliability of the valve and hence of the filter cartridge.

As already explained above, in a preferred example, the valve opening may be a gap between the first-end plate and the cartridge-support ring. Alternatively, the valve opening may be a recess or a through hole in the cartridge-support ring. The gap, i.e. the valve opening opens when the valve member has been moved in the open position. In a particularly preferred example, the valve opening may be delimited by the peripheral surface and/or an axially facing surface of the first-end plate. Generally, it can be any of the two axially facing surfaces, but it is preferred, if it is the axially facing surface that faces away from the filter element and/or the peripheral surface. In these cases, the pressure drop for filtering a fluid (in case the valve is a check valve) or for bypassing the filter element (in cae the valve is a bypass valve) can be kept particularly low (for a given available space of the filter cartridge). In other words, the surface area of the valve opening can be increased while still enabling a very compact filter system.

Preferably, the inner free diameter *dᵢ* of the cartridge-support ring is greater than or equal to the outer diameter *dₐ* of the end plate or to *α* · *dₐ*, i.e. *dᵢ* ≥ *α* · *dₐ*, wherein *α* ∈ {1.05, 1.01, 0.95, 0.9,0.8,0.75,0. 70,0.60,0.50} and larger values of *α* are preferred as this increases the surface area of the valve opening. This further contributes to a low pressure drop of the filter cartridge. In addition, after installation of the filter cartridge in a fluid filter housing cover, the cartridge-support ring may radially position and hence support the end plate in the housing cover thereby simplifying to mount the cover to its corresponding housing socket

As already indicated, at least one movable flap (e.g. the second flap and/or the first flap) may have an attached first end and a free second end, wherein the free end may be movable enabling to shift the valve member from the open position to the closed position or vice versa. The attached second end may be movably attached to the cartridge-support ring or to the end plate as explained above, e.g. by a hinge. In addition, or alternatively, the valve member may be made of or at least comprise an elastic material configured to be bent elastically by a fluid flow to release the valve opening. In this case the hinge may be considered to be provided by an elastic portion of the flap and hence forms a unitary piece with the flap. This construction is particularly reliable and very cost effective.

As already apparent, in the closed position, the free second end of the first flap and/or the free second end of the second flap may contact the corresponding valve seat of the cartridge-support ring and/or the end plate respectively. Whereas in the open position, the free second end/s may be spaced away from the valve seat (portion) of the respective other of the cartridge-support ring and the first-end plate and/or a free second end of another flap.

In a preferred example, the cartridge-support ring has or supports a sealing ring configured to contact an inner surface of the filter housing. This reduces the material being used for the filter cartridge, being in most cases a single use consumable. Further, each time the cartridge is replaced, a new sealing ring is installed as well, this reduces the risk of leakage without any additional mounting step of the mechanic replacing a used cartridge. The inner surface of the filter housing may be a housing surface facing towards the filter axis and/or an axially facing surface, of e.g. the housing socket. Hence, the sealing ring may be configured to sealingly contact an inner housing surface such as a surface of the housing socket and/or the filter housing cover. In addition or alternatively, the sealing ring may be configured to be clamped between the housing cover and the housing socket when the housing is closed.

Summarizing, the optional sealing ring may provide two functions, namely: (i) to radially center the first-end plate in a fluid housing (, e.g., in a fluid housing cover) and hence provides the above-mentioned abutment surface and (ii) to close or avoid a bypass to the valve. If the optional sealing ring is attached to the cartridge-support ring and/or the first-end plate, it is ensured that the sealing ring is replaced each time the cartridge is replaced as explained above.

Preferably, the sealing ring is unitary and/or in contact with the valve member. This measure not only reduces manufacturing cost, but as well enhances operational safety of the valve as it reduces the risk of potential leakages of the valve and allows to maintain the valve member in its intended position by clamping the sealing ring in between of a housing and the cartridge-support ring and/or the first-end plate.

In a preferred example, the cartridge-support ring may be attached by at least one spacer to the first-end plate. Three or more spacers are preferred, but a single one can be sufficient, and two are also possible. The(se) spacer(s) can be considered as beam(s) having a first portion being attached to the first-end plate and a second portion to which the cartridge-support ring may be attached. At least one of these spacers, preferably multiple of these spacers provide a support surface supporting the valve member in its closed position. In other words, at least one of the spacers (preferably all) comprise a support surface and the at least one support surface provides an abutment for the valve member in the closed position. This measure enhances reliability of the valve and the maximum pressure the valve can resist in the closed position of the valve member. In an example, a spacer's valve member facing surface may be configured as an abutment defining, preferably together with the optional valve seat, the closed position of the valve member. The spacer(s) may be unitary with first-end plate and/or the cartridge-support ring.

The optional first fluid channel may extend, for example, from the first-end plate to the second-end plate. At least one of these end plates may have a through hole configured for providing a fluid communication of the fluid channel with a fluid duct (typically with the second duct) of the fluid filter housing. The first-end plate may have a first portion of a fluid connector being configured to be connected to a mating second portion of a fluid connector of the housing's socket thereby providing a fluid communication between the fluid channel and the second fluid duct of the housing socket. The fluid connector may be a plug-socket type fluid connector.

In a particularly preferred example, the first-end plate and/or the second-end plate may have a protrusion on its first side, i.e. on the side that faces away from the filter element. The first side of the respective end plate may hence be configured to face towards the housing socket of a filter housing. The protrusion may provide for a radial offset of the valve seat and thus contribute to a particularly low flow resistance. For example, the protrusion may form a ring and may have a peripheral surface. The protrusion's peripheral surface may be a portion of the peripheral surface of the first-end plate and/or the second-end plate. The diameter of the protrusion's peripheral surface may be at least essentially smaller than or at least essentially equal to the diameter of the filter element. For example, the diameter *dₚ* of the protrusion's peripheral surface may be in between of 50% of the diameter *d_{f}* of the filter element and 105% of the of the diameter of the filter element. For example *αₘᵢₙ* · *d_{f}* ≤ *dₚ* ≤ *αₘₐₓ* · *d_{f}*, wherein *αₘᵢₙ* ≤ *αₘₐₓ* and *αₘᵢₙ*, *αₘₐₓ* ∈ *A* and A={1.05, 1.01, 0.95, 0.9, 0.8, 0.75, 0.70, 0.60, 0.50}. Thus, *αₘᵢₙ*, *αₘₐₓ* can take any combination of values of the set A provided the constraint *αₘᵢₙ* ≤ *αₘₐₓ* is met, for example the *αₘᵢₙ* could be 0.6 and *αₘₐₓ* could 1.01 i.e. the tuple (*αₘᵢₙ*, *αₘₐₓ*)*=* (0.6, 1.01), but any other tuple obeying *αₘᵢₙ* ≤ *αₘₐₓ* and *αₘᵢₙ*, *αₘₐₓ* ∈ A can be selected. In this sense, the peripheral surface of the first-end plate's protrusion may be considered as to be retracted in the antiradial direction relative to the outer diameter of the filter element.

The cartridge-support ring may surround the protrusion of the first-end plate with a gap in between. Hence there may be a gap between the peripheral surface of the first-end plate's protrusion and the cartridge-support ring. This gap may define a valve opening of the valve. For example, the peripheral surface of the first-end plate's protrusion may be the valve seat. In this case it is preferred, if the first end of the valve member is attached to (and/or unitary with) the cartridge-support ring and the second end of the valve member may be configured to contact the valve seat (if in the closed position), which -in the present example- may be at least a portion of the peripheral surface of the first-end plate's the peripheral surface. In a preferred example, the valve member may be or comprise a ring, being located at least partially in the valve opening. In yet other words, the second end of the valve member may in its closed position sealingly contact the peripheral surface of the first-end plate. In more detail, the second end of the valve member may in its closed position sealingly contact the peripheral surface of the first-end plate's protrusions. The second end may be biased towards its closed position to ensure it seals the valve opening tightly.

In a preferred example, the cartridge-support ring may comprise a gasket portion. The gasket portion may surround the support element of the cartridge-support ring and an optional gap being between the support element and the gasket portion is preferably omitted. In other words, the gasket portion may preferably be attached to the support element and may be configured to be located in between of the support element and the housing, and to seal a gap between the filter cartridge and the housing.

Further the gasket portion, if correctly installed in the filter housing, may be be compressed between an abutment of the housing cover and the housing socket. Preferably, there is no gap between the gasket portionand the support element.

The cartridge-support ring may further comprise at least one web. The web may be a ring web or comprise one or at least two ring segments. The web may be configured to extend between the support element and the housing socket and may attach the gasket portion with the valve member and/or with the support element. The web, the gasket portion and the valve member may be unitary and thus form a single piece, which simplifies the manufacturing process of the cartridge. In operation, a fluid to be filtered may enter the space between the first-end plate and the housing socket via a duct of the housing socket and push the valve member's second end radially outwards, which thus in turn releases the valve opening.

The valve can be configured as a check valve for preventing a fluid backflow. In this example, the first-end plate is preferably configured to be attached to the socket of the filter housing. Further, the valve can be configured as a bypass valve. In this example, the second-end plate may for example be configured to be attached to the housing socket, while the first-end plate is configured to separate a bypass duct from the volume encircling the filter element. If the valve opens, the fluid may flow from the volume between the filter housing wall and the filter element into the bypass duct and from there, e.g. via an optional opening in the first end-plate into the first fluid channel and from there into the corresponding duct of the housing socket. Thus in short, if the first-end plate is configured to be mounted to the housing socket, the valve may be backflow preventing check valve. If the first-end plate is configured to separate a bypass duct from the volume upstream of the first-end plate, the valve may be bypass valve. Of course the filter cartridge may comprise a second valve with a second valve member and a second valve opening, wherein the second valve opening is located between a second cartridge support ring and the second-end plate. In other words, the filter cartridge may have a first "first-end plate" and a second "first-end plate", wherein the second first -end plate is the second-end plate.

As already apparent, a filter housing configured for receiving the filter cartridge may comprise a housing socket as already described above. A housing cover may be releasably attached to the housing socket and define a filter housing volume. The above-described filter cartridge may be configured to be inserted into the filter housing volume. In other words, the filter cartridge may be configured to be accommodated and/or received in and/or by the filter housing volume, respectively. The housing's fluid outlet may be connected by the second duct and the optional fluid connector with the first fluid channel. A gap extending between the peripheral surface of the filter element and the filter housing and/or between the filter element facing surface of the housing socket and the first-end plate may define a second conduit. The second conduit may be in fluid communication with a fluid inlet of the filter housing e.g. via the first duct. In a preferred example, the valve may be configured to be located in the second conduit. The latter allows for a large cross-sectional surface of the valve opening and at the same time has -if at all- only an only a very small impact on the space requirement of the fluid filter system.

The first flap is only a vivid example of the first portion of the valve member and is in this sense a pars pro toto of its superordinate, i.e. of the first portion of the valve member. In other words, "first flap" can be replaced herein by "first portion of the valve member". The same holds mutatis mutandis for "second flap", which can be replaced by "second portion of the valve member".

In an embodiment, a filter cartridge as described herein, and a filter housing as described herein may be provided as a kit. In a preferred example, the filter cartridge as described herein is installed, accommodated and/or received in and/or by, respectively, a fluid filter housing as described herein thereby forming a fluid filter system. Further, herein the term "fluid" can be replaced by "oil" or another fluid like e.g. "air", "fuel", "water" or the any other type of fluid, be it gaseous or liquid. Further, herein "fluid" is considered as the superordinate of "gas" and "liquid".

Herein the wording *"at least essentially"* indicates that a condition is preferably met, but that deviations can be accepted. In case the condition describes an angular relation like such as parallel, orthogonal, or the like, this angular relation is preferably met but deviations within angle ±*α* be accepted, wherein *α* E A and A = {30°, 25°, 20°, 15°, 10°, 5°, 2.5°, 1°, 0°}. In other words, *α* can take any value of the set A. In case other parameters are disclosed to be met *"at least essentially"* this may be understood that these are met within ±*δ*%, wherein *δ* ∈ *D* and *D* = {25, 20, 15, 10, 5, 2.5, 1, 0}, i.e. *δ* can take any value of the set D.

### Description of Drawings

In the following, the invention will be described by way of example, without limitation of the general inventive concept, on examples of embodiment with reference to the drawings.
- Figure 1: presents a sectional view of a filter cartridge, with a closed valve.
- Figure 2: presents a sectional view of a filter system with the filter cartridge of FIG. 1.
- Figure 3: presents a detail of FIG. 2.
- Figure 4: presents the same detail as FIG. 3, but the valve is in open.
- Figure 5: presents a detail of a filter cartridge in a fluid filter housing with an alternative valve (first alternative).
- Figure 6: presents a detail of a filter cartridge in a fluid filter housing with an alternative valve (second alternative)
- Figure 7: presents a detail of a filter cartridge in a fluid filter housing with an alternative valve (third alternative)
- Figure 8: presents a detail of a filter cartridge in a fluid filter housing with an alternative valve (fourth alternative)

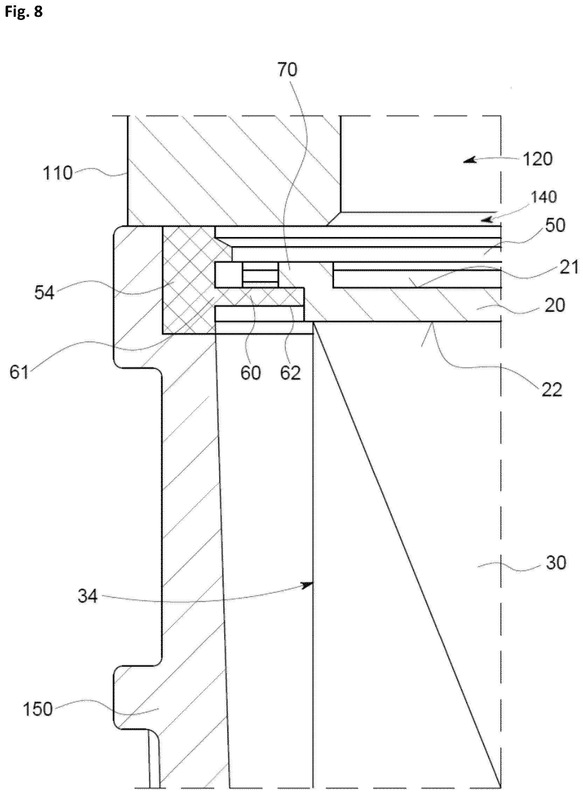

- Figure 8: presents a detail of a filter cartridge in a fluid filter housing with an alternative valve (fifth alternative)

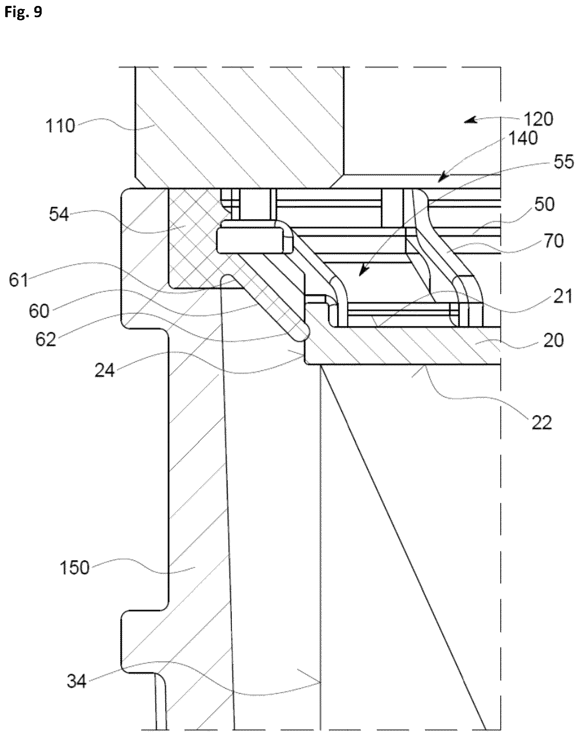

- Figure 9: presents a detail of a filter cartridge in a fluid filter housing with an alternative valve (sixth alternative)

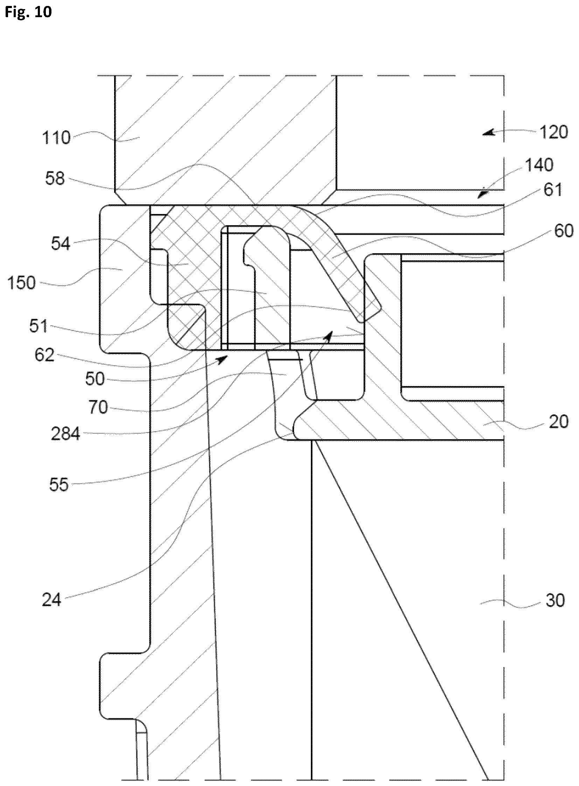

- Figure 10: presents a detail of a filter cartridge in a fluid filter housing with an alternative valve (seventh alternative)

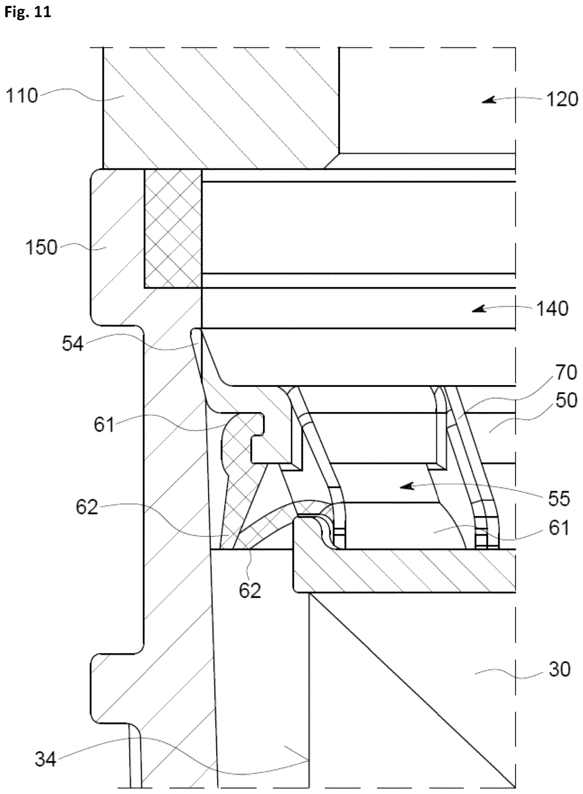

- Figure 11: presents a detail of a filter cartridge in a fluid filter housing with an alternative valve (eight alternative)

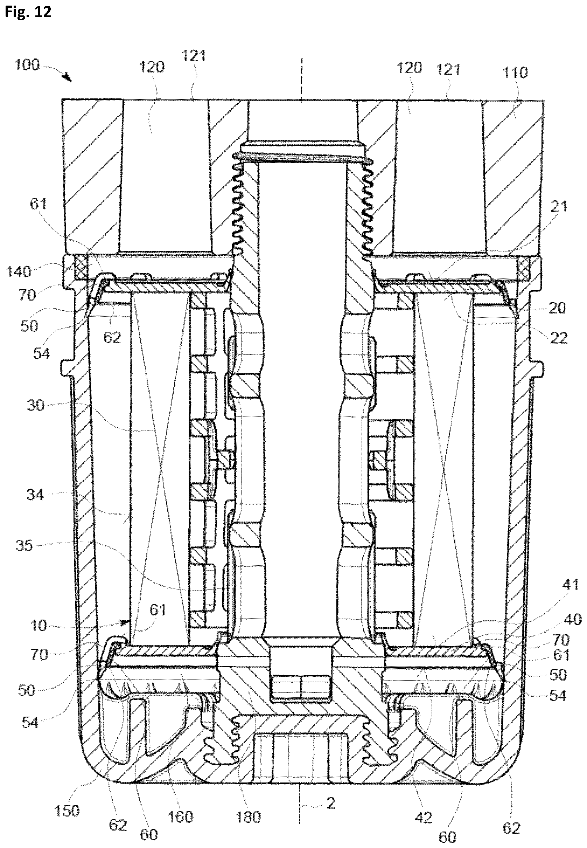

- Figure 12: present a filter cartridge in a fluid filter housing having two valves.

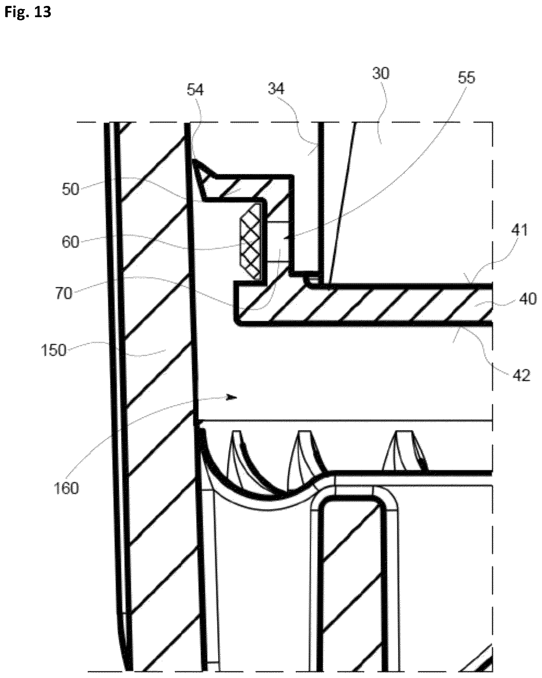

- Figure 13: presents an example for bypass valve.

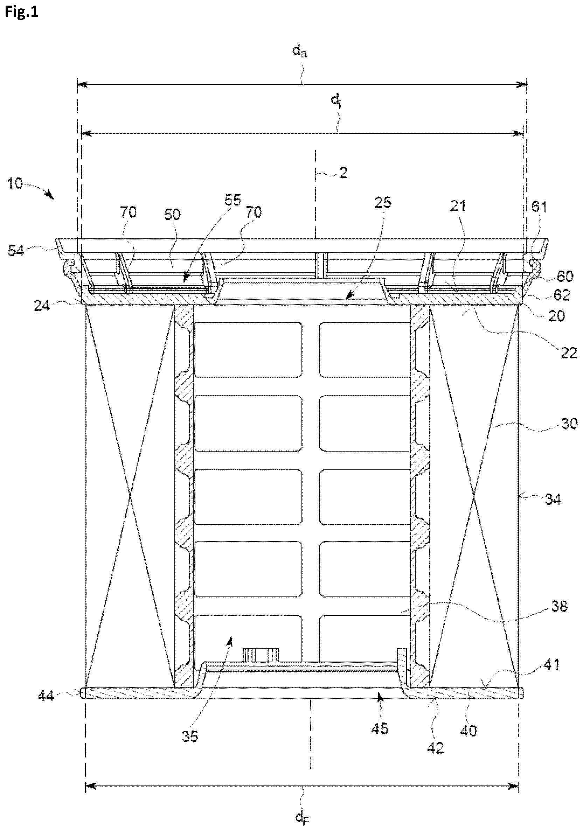

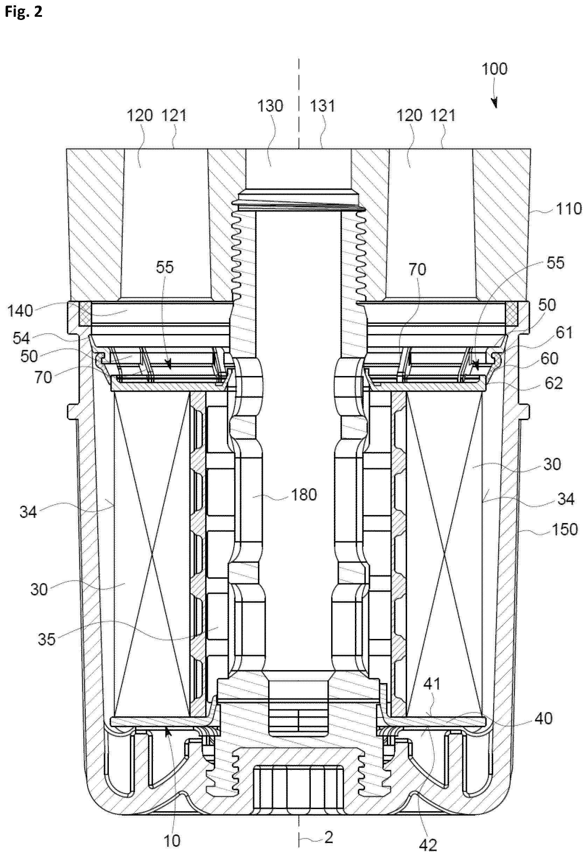

An example filter cartridge 10 like the one shown in FIG. 1 may have a longitudinal axis 2 along which the filter cartridge 10 may be pushed onto a housing socket of a fluid-filter housing 100 into the position as shown in FIG. 2. Referring to FIG. 1 again, the filter cartridge may comprise a first-end plate 20, a filter element 30 and/or a second-end plate 40. As shown, the filter element 30 may be attached with a first end to the first-end plate 20 and/or with a second end to the second-end plate 40. In the depicted example both end plates 20, 40 are shown and in this sense the filter element 30 may be located in between of the first-end plate 20 and the second-end plate 40.

The first-end plate 20 may have a first side 21 and a second side 22. The first side 21 of the first-end plate 20 may face away from the filter element 30 and the second side 22 of the first-end plate 20 may face towards the filter element 30. A peripheral surface 24 of the first-end plate 20 may connect the first side 21 and the second side 22.

Similarly, the second-end plate 40 may have a first side 41 and a second side 42. The first side 41 may face towards the filter element 30 and the second side 42 of the second-end plate may face away from the filter element 30. A peripheral surface 44 of the second-end plate 40 may connect the first side 41 and the second side 42.

Like in the depicted example, the filter element may form a fluid channel 35. The fluid channel 35 may be in fluid communication via a through hole 25 in the first-end plate 20 with a volume at the first side 21 of the first-end plate. The fluid channel 35 may as well (alternatively or in addition) be in fluid communication via a through hole 45 in the second-end plate 40 with a volume at the second side 42 of the optional second-end plate 40.

An optional channel support structure 38 may be installed in the fluid channel 35 and may be configured to bear antiradial loads on the filter element 30 and thereby maintain the fluid channel 35 open. In a more vivid language, the optional support structure 38 may be configured to prevent the filter element 30 from being squeezed by a fluid pressure drop across the filter element.

The filter cartridge may further comprise a cartridge-support ring 50. As shown, the cartridge-support ring 50 ring may be spaced from the first-end plate 20 and preferably thereby define a gap 55 between the first-end plate 20 and the cartridge-support ring 50. In this sense, the cartridge support ring can be considered as a first cartridge support ring of the "first and/or second cartridge support ring" being described in the above section "Summary of the invention". As shown in the presented example, the gap 55 may be intersected by optional spacers 70 in ring gap sections. In this sense the gap 55 may be considered as a ring gap being optionally intersected by the optional spacers 70 into ring gap sections. The gap 55 may be a valve opening 55 of a valve. This valve may be considered as the first valve of the first and/or second valve described in the above section

"Summary of the invention" and hence the valve opening 55 may be considered as an example of the first valve opening and the corresponding valve member 61 of the first valve member of the above mentioned "first and/or second valve opening" and "first and/or second valve valve member". Thus, the valve opening 55 may be located between the cartridge-support ring 50 and the first-end plate 20 and may have all attributes of the gap as explained above. The cartridge-support ring 50 may be configured to define a radial position of the first-end plate in a fluid filter housing 100 (e.g. radially and/or axially as shown in FIG. 2). More generally, the cartridge-support ring 50 may thus be configured to support the cartridge 10 in a fluid filter housing 100. The fluid filter housing 100 may be the fluid filter housing 100 as shown in FIG. 2 or any other fluid filter housing. This may be accomplished by at least one abutment surface 54, which like in the presented example can be the peripheral surface 54 of the cartridge-support ring 50. Preferably, as the presented example, the abutment surface 54 may be configured as a sealing surface, configured to seal against an inner surface of a fluid filter housing 100, e.g., as shown in FIG. 2.

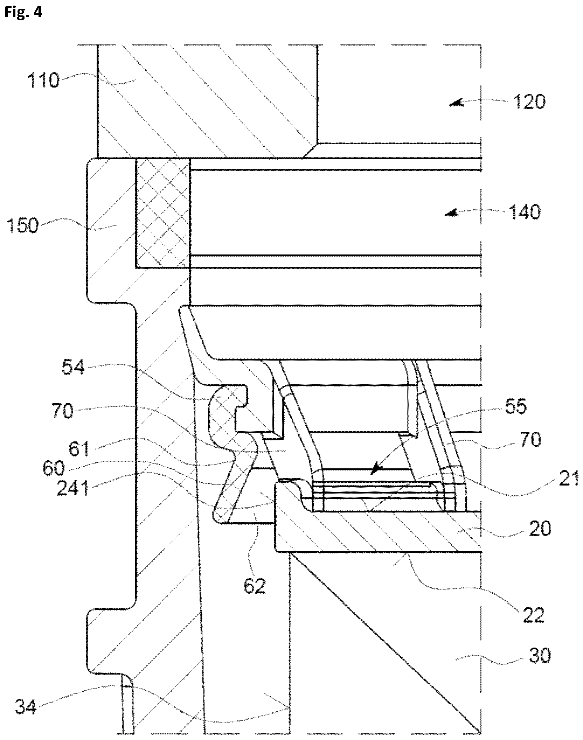

A first end 61 of a valve member 60 may be attached to the cartridge-support ring 50 (see FIG. 1 to FIG. 4). The valve member 60 may be hinged or elsewise movably supported such that a free second end 62 of the valve member is movable between an open position (see FIG.4) and a closed position (see FIG. 1 to FIG. 3). In a preferred example, the valve member 60 is unitary with the hinge. For example, the hinge may be an elastic ring of the valve member 60 (compare FIG. 3 and 4). Like in the depicted example, the entire valve member 60 (including the hinge) may be a unitary piece made of an elastic polymer, i.e. of an elastomer, wherein an elastomer is a polymer that displays rubber-like elasticity (c.f. IUPAC definition of elastomer).

In the closed position of the valve member 60, the free second end of the valve member 60 (preferably sealingly) contacts a valve seat 241 (see FIG. 4). The valve seat may be considered as an example of the first valve seat of the "first and/or second valve seat" described above in the section "Summary of the invention". Like in the example of FIG. 1 to FIG 4, the valve seat 241 may be a ring surface of the first-end plate's peripheral surface 24. In other words, the valve seat 241 may be a portion of the first-end plate's peripheral surface 24. It is advantageous that the in closed position, the valve member 60 closes the valve opening 55 because one of the two ends 61, 62 (first end 61 and second end 62) of the valve member 60 contacts the cartridge-support ring 50 and the other the first-end plate 20, at least essentially sealingly. It is further advantageous that in the open position the valve opening 55 is released, e.g. because a free second end 62 of the valve member may be moved away from the valve seat.

Like in the example of FIG. 1 to FIG. 4, the inner free diameter *dᵢ* of the cartridge-support ring 50 may have at least essentially (within ±10%, less preferred within ±15%, even lees preferred within ±25%) the same or a larger diameter than the outer diameter *dₐ* of the first-end plate 20. This enables to maximize the area of the valve opening 55 and thus to reduce the pressure drop of fluid flowing through the valve.

As can be seen in FIG. 2, the filter cartridge 10 may be configured to be positioned in a fluid-filter housing 100. In the presented example, the fluid-filter housing comprises a housing socket 110, a fluid filter housing cover 150 and a standpipe 180 (optional). The standpipe 180 may be attached with a first end to the socket 110, and may extend through the end plates 20, 40 and may hold the housing cover 150 in place. In other words, the housing cover 150 may be releasably attached to the standpipe 180.

The socket 110 may comprise an inlet 121 for receiving a fluid from a fluid source (e.g. an oil reservoir). The inlet 121 may be connected by an optional first duct 120 of the fluid filter housing 100 to the volume between the filter element 30 and the housing cover 150, as shown in FIG. 2 via a space 140 formed between the first side 21 of the first-end plate 20 and the socket 110. As can be seen, the valve may be located in the flow path of the fluid from the socket's inlet 121 to the peripheral surface 34 of the filter element 30.

The cartridge-support ring 50 may, as shown, sealingly contact an inner surface of the fluid filter housing 100 with a gasket portion 54 (*gasket* 54 for short). In FIG. 2 this is indicated by an overlapping portion of the outer portion of the cartridge-support ring 50 with the housing cover 150, which in practice is of course impossible, but may be considered to indicate that the gasket 54 may be elastic and may be biased against the fluid filter housing 100, if installed. Thus, the fluid flowing from the inlet 121 to the filter element 30 has to pass the valve opening 55, which it can, as the fluid pressure driving the fluid flow forces the second end 62 of the valve member 60 away from the valve seat 241 and thereby finds its way through the valve opening (see FIG. 4). From the valve opening 55 the fluid may enter the volume surrounding the filter element 30, may flow through the filter element 30 into the fluid channel 35 and via the standpipe 180 and an optional second duct 130 to a fluid outlet 131 of the housing 100.

If the pressure changes its sign, the fluid cannot flow backwards as the pressure difference between the filter element's peripheral surface 34 and the inlet 121 pushes the valve member's free second end 62 against the valve seat 241. In this example the valve is thus a check valve configured as fluid backflow prevention valve. Further, the spacers 70 may support the valve member 60 in its closed position and hence may contribute to increasing the reliable operation of the valve even at elevated pressure gradients as can be seen in FIG. 3.

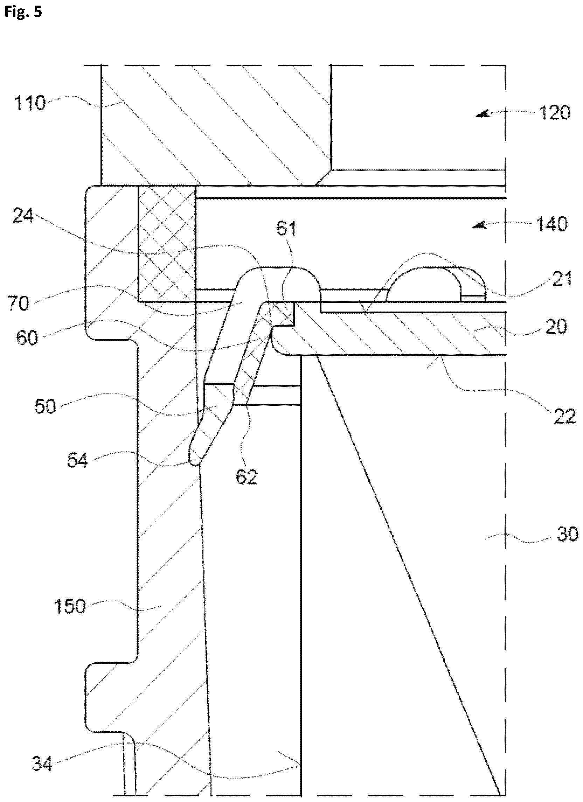

The example of FIG. 5 is very similar to the example of FIG. 1 to FIG. 4 and hence only the detail corresponding to FIG. 3 is shown, as the rest may be identical. The description of FIG. 1 to FIG. 3 may be read on FIG. 5 as well and mainly only differences are explained: Different from the filter cartridge of FIG. 1 to FIG. 4, the first end 61 of the valve member 60 may be attached to the first-end plate 20. In particular, the first end 61 of the valve member may be attached to the peripheral surface 24 of the first-end plate 20 and/or to a ring groove of the first-end plate 20. As shown, in the closed state of the valve member60, the second end 62 of the valve member 60 may contact a valve seat being formed by an at least essentially antiradially facing surface portion of the cartridge-support ring 50.

A radially outward facing surface portion of the cartridge-support ring's 50 peripheral surface may comprise a sealing surface and may in this sense be considered to be a gasket 54 configured to seal a gap between the filter cartridge 10 and a filter cartridge facing surface of the filter housing 100 (FIG. 5). This sealing function is indicated by an overlap of the gasket 54 into the housing 100, which in practice can of course not happen, but may be understood to symbolize a preload of the gasket 54 and hence of the cartridge-support ring 50 against the boundary of the housing 100. As in FIG. 1 to FIG. 4, the cartridge-support ring 50 may be attached by spacers 70 to the first-end plate 20 and may support the valve member 60 in its closed state. In other words, the spacer's 70 valve member 60 facing surface may be configured as an abutment defining, together with the valve seat, the closed position of the valve member 60. Further, different to the filter cartridge in FIG. 1 to FIG. 4, the cartridge-support ring 50 may be located besides the filter element 30. Besides is here to be understood with respect to the axis 2, i.e. there exists a plane to which the axis 2 is perpendicular and that intersects the filter element 30 and the cartridge-support ring 50. The advantage of this position of the cartridge-support ring is that for a given maximum length (measured parallel to the axis 2) of the filter housing the length of the filter element 30 can be increased, i.e. the service life of the filter cartridge can be enhanced and as well the pressure drop across the filter element 30 for a given flow rate of a given fluid can be reduced. Alternatively, as shown in FIG. 1 to FIG. 4, the cartridge-support ring 50 may be above the first-end plate 20 which provides the advantage of an increased valve opening area, i.e. the pressure drop across the valve can be reduced. The second alternative (cartridge-support ring 50 above the first-end plate 20) is advantageous if the constraints on the dimensions of the filter system are relaxed. Above references to the orientation of the cartridge in the figure and the reference to the orientation of the figures can avoided by defining the position of the cartridge-support ring to be at the side of a plane that faces away from the filter element 30, wherein the plane is perpendicular to the filter axis 2 and intersects the first end of the filter element 30.

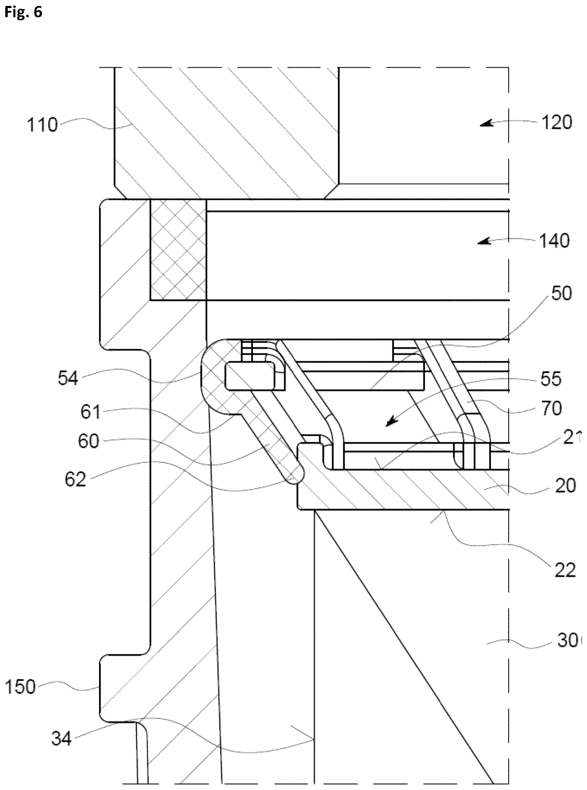

The example of FIG. 6 is very similar to the example of FIG. 1 to FIG. 5 and hence only a detail corresponding to FIGs. 3 and 5 is shown, as the rest may be identical. The description of FIG. 1 to FIG. 5 may be read on FIG. 6 as well and mainly only differences are explained: Like in the example of FIG. 1 to 4, the valve member 60 is attached to the cartridge-support ring 50. Different from the cartridge in FIG.1 to 5, the sealing surface of the cartridge-support ring is unitary with the valve member 60, which reduces potential fluid leaks and manufacturing costs. In other words, the gasket portion 54 of the cartridge-support ring may be unitary with the valve member 60. Further, reliability of the valve may be enhanced as shown, if the first end of the valve member is so to speak clamped in between of the housing and the corresponding position of the cartridge-support ring 50 that is preferably directly attached to the spacers 70. As shown, the cartridge-support ring 50, the first-end plate 20 and the at least one spacer 70 may be unitary, which provides for enhanced durability and reduced manufacturing costs.

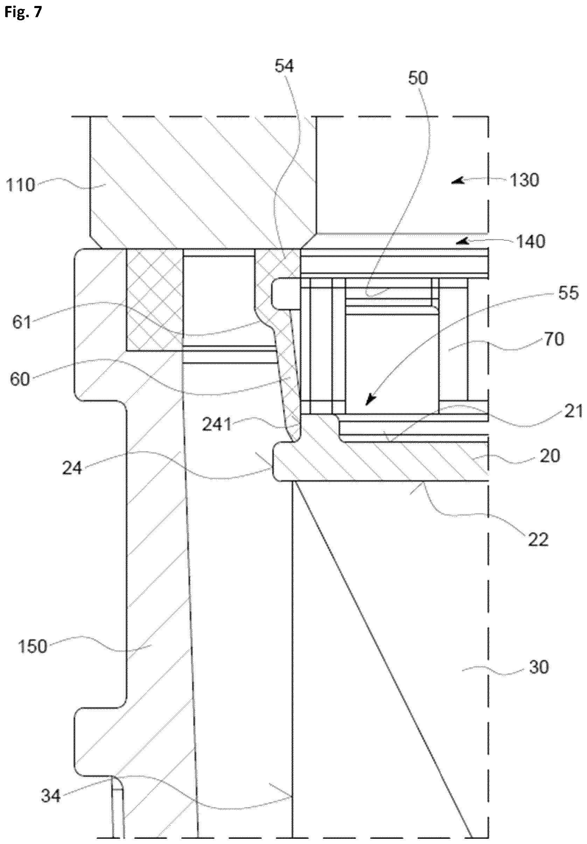

The example of FIG. 7 is very similar to the example of FIG. 6 and the description of FIG. 1 to 6, in particular the description of FIG.6, may be read on FIG. 7 as well. The main difference between the cartridges in FIG. 6 and FIG. 7 is that in FIG. 6, the peripheral surface 54 of the cartridge-support ring 50 is a sealing contacting the filter cartridge facing side of the housing cover 150, whereas in FIG. 7 the portion of the cartridge-support ring 50 being configured as a gasket 54 is the portion that faces at least essentially parallel to the axis 2 and away from the filter element 30 and the first-end plate 20. The advantage is that the manufacturing costs are further reduced and that the housing cover 150 may force the gasket portion 54 of the sealing ring against the socket 110, thereby providing a particular tight seal. In particular in examples like the one of FIG. 7, the inner diameter *dᵢ* of the cartridge-support ring 50 may be smaller than the outer diameter *dₐ*, but this is not required.

The example of FIG. 8 is very similar to the example of FIG. 7 and the description of FIG. 1 to FIG. 7, in particular the description of FIG. 7, may be read on FIG. 8 as well. The cartridge of FIG. 8 distinguishes in that, like in FIG. 6 and 7 the valve member 60 is unitary with a gasket portion 54 of the cartridge-support ring 50 but the cartridge 10 of FIG. 8 has a gasket portion 54 which may resemble an O-ring (in this example with rectangular cross section) configured to be axially compressed between the socket 110 and the housing cover 150. By this optional compression the gasket 54 expands as well radially and is hence biased against the antiradially facing portion of the housing cover 150. The gasket portion 54 (the gasket 54) of the cartridge-support ring 50 may hence function as well as a housing gasket preventing fluid from leaking through a gap between the housing cover 150 and the socket 110.

The example of FIG. 9 is very similar to the example of FIG. 8 and the description of FIG. 1 to 8, in particular the description of FIG. 8, may be read on FIG. 9 as well. Further, the position of the cartridge-support ring 50 corresponds essentially to the position of the cartridge-support ring 50 in FIG. 1 to 4. The advantage of the cartridge example in FIG. 9 is that like the cartridge in FIG.8, it is configured to provide as well the housing gasket. Hence every time the cartridge is replaced, the housing gasket is as well replaced without any additional gasket handling. Further the costs for the filter system are reduced as the gasket portion 54 of the cartridge-support ring 50 is unitary with at least a portion of the valve member 60. In other words, the gasket portion 54 of the cartridge-support ring 50 may extend and/or transition into the first end 61 of the valve member 60.

The example of FIG. 10 is very similar to the example of FIG. 9 and the description of FIG. 1 to 9, in particular the descriptions of FIGs. 6, 7 and 9, may be read on FIG. 10 as well. Like the other examples, the example cartridge shown in FIG. 10 may comprises a filter element 30, a first-end plate 20, a cartridge-support ring 50 and a valve. The valve may comprise with a valve opening 55 and a valve member 60. As shown, the first-end plate 20 may have a protrusion 28 on its first side, i.e. on the side that is configured to face towards the socket 110 and hence faces away from the filter element 30. The protrusion 28 may form a ring and may have a peripheral surface 284. The protrusion's peripheral surface 284 may be a portion of the peripheral surface 24 of the first-end plate 20. In a preferred example the diameter of the protrusion's peripheral surface 284 is at least essentially smaller than or at least essentially equal to the diameter of the filter element. For example, the diameter *dₚ* of the protrusion's peripheral surface 284 may be in between of 50% of the diameter *d_{f}* of the filter element and 105% of the of the diameter of the filter element e.g.: ${α}_{min} ⋅ {d}_{f} \leq {d}_{p} \leq {α}_{max} ⋅ {d}_{f} , wherein {α}_{min} \leq {α}_{max}$ and ${α}_{min} , {α}_{max} ∈ A and A = \left\{1.05, 1.01, 0.95, 0.9, 0.8, 0.75, 0.70, 0.60, 0.50\right\} .$

Thus, *αₘᵢₙ*, *αₘₐₓ*can take any combination of values of the set A provided the constraint *αₘᵢₙ* ≤ *αₘₐₓ* is met.

The cartridge-support ring 50 may surround the protrusion 28 with a gap in between. This gap between the protrusion's peripheral surface 284 and the cartridge-support ring 50 may define a valve opening 55 of the valve.

The valve member 60 may be or comprise a ring, being located at least partially in the valve opening 55. A first end 61 of the valve member 60 may be attached to and/or be unitary with the cartridge-support ring 50. The second end 62 of the valve member 60 may in its closed position sealingly contact a peripheral surface 24 of the first-end plate 20. Like in the presented example, the second end 62 may be biased towards its closed position, which is symbolized by the distal end 62 (i.e. the second end 62) of the valve member 60 to overlap the first-end plate 20. In more detail, like in this example, the valve seat may be provided by the protrusion's peripheral surface 284, which may be considered as a (e.g. retracted) portion of the peripheral surface 24 of the first-end plate 20, wherein retracted references to the radial direction. In other words like in the shown cross section, the peripheral surface 284 of the protrusion may be retracted in the antiradial direction relative to the outer diameter of the first-end plate 20.

Similar to the other figures, as well in the example of FIG. 10, the cartridge-support ring 50 may be attached by at least one spacer 70 to the first-end plate 20. For example, the at least one spacer 70 may extend between the peripheral surface 24 of the first-end plate 20 and the cartridge-support ring 50. In more detail, the at least one spacer 70 may extend between the peripheral surface 24 of the first-end plate 20 and a support element 51 of the cartridge-support ring 50. The at least one spacer 70 maybe unitary with the first-end plate 20 and/or the support element 51.

The cartridge-support ring 50 may comprise a gasket portion 54. As can be seen, the gasket portion 54 may surround the support element 51 of the cartridge-support ring 50 and the optional gap being shown between the support element 51 and the gasket portion 54 is preferably omitted. In other words, the gasket portion may preferably be attached to the support element 51 and may be configured to be located in between of the support element 51 and the housing, and to seal a gap between the filter cartridge and the housing.

In FIG. 10, the gasket portion 54 is shown in an uncompressed state and hence it is shown to overlap with a socket 110 facing abutment of the housing cover 150, to thereby indicate its optional preloading against the housing covers inner wall. If correctly installed in the filter housing, the gasket portion 54 will be compressed between the abutment of the housing cover 150 and the socket 110 and the gap between the gasket portion 54 and the support element 51 is closed and/or omitted.

The cartridge-support ring 50 may further comprise at least one web 58. The web may be a ring web 58 or comprise one or at least two ring segments. The web 58 may be configured to extend between the support element 51 and the socket 110 and may attach the gasket portion 54 with the valve member 60 and/or with the support element 51. The web 58, the gasket portion 54 and the valve member 60 may be unitary and thus form a single piece, which simplifies the manufacturing process of the cartridge. In operation, a fluid to be filtered may enter the space between first-end plate 20 and the socket 110 via the second duct 130 of the socket 110 and push the valve member's second end 62 radially outwards, which thus releases the valve opening 55. From the valve opening 55, the fluid may flow into the volume between the housing cover 150 and the filter element 30. From there the fluid may flow through the filter element 30 into the filter channel 35 (see FIG. 1 to 4) and from there via the second duct 130 (see FIG. 2) to a fluid outlet 131 of the filter housing. The example in FIG. 10 is particularly preferred, as it can be manufactured easily, proved very reliable and makes very efficient use of the available space, i.e. for a given volume of the filter cartridge, the size of the filter element 30 can be maximized, the latter providing for an enhanced life span of the filter cartridge and a reduced pressure drop across the filter cartridge.

The example of FIG. 11 is very similar to the cartridge of FIGs. 1 to 10 and the description of FIG. 1 to 10, in particular the description of FIGs. 1 to 4 may be read on FIG. 11 as well. The main difference is that the valve member 60 has two portions, a first portion being attached with a first end 61 to the first-end plate 20 and a second portion being attached with a first end 61 to the cartridge-support ring 50. The two free ends 62 of the two portions of the valve member 60 may be configured to mutually provide each other a valve seat in their respective closed positions as shown. To say it differently, the cartridge may have a first first end 61 of the valve member 60 attached to the first-end plate 20 and a second first end 61 of the valve member 60 may be attached to the cartridge-support ring 50. A first second end 62 of the valve member 60 and a second second end 62 of the valve member 60 may contact each other in the closed position of the valve member 60. This may be understood that the valve member 60 may be considered to comprise at least two portions, which may be considered as valve flaps. And each of these portions may have first end and a second end. The two portions can be two different parts, but can as well be unitary, e.g. be connected by (preferably elastic) bridges between the first ends 61 or the two portions of the valve member 60.

The example shown in Fig. 12 is almost identical to the example shown in Fig. 2. The main difference is that filter cartridge 10 comprises an optional second cartridge support ring 50. As shown, the second cartridge-support ring 50 ring may be spaced from the second-end plate 40 and preferably thereby define a gap 55 between the second-end plate 40 and the second cartridge-support ring 50. In this sense, the cartridge support ring 50 can be considered as a second cartridge support ring of the "first and/or second cartridge support ring" being described in the above section "Summary of the invention". At this point it is highlighted that in the shown example, the first cartridge support ring 50 being shown spaced from the first-end plate 20 and preferably thereby defining a (first) gap 55 between the first-end plate 40 and the first cartridge-support ring 50 is optional. "First" and "second" are not enumerators in the sense that the presence of a "second cartridge support ring" implies the presence of a first cartridge support ring, but only a linguistic possibility to distinguish two identical or similar parts being optionally attached to their associated first- and second-end plates as expressed above by the usage of "first and/or second cartridge support ring".

In FIG. 12, the first valve corresponds to the first valve as shown in FIG. 5 and the description of FIG. 5 can be read on FIG. 12 as well. Further, the design of the second valve is very similar to the design of the first valve and mutatis mutandis, one can the description of read FIG. 5 as well on the second valve as shown in FIG.12. One simply has to assume that the first-end plate 20 of FIG.5 has been shifted to the opposite end of filter element 30 and thereby became a second-end plate 40. Because in FIG. 5 the first cartridge-support ring 50 is shown attached by first spacers 70 to the first-end-plate and the first valve member 60 is shown in FIG. 5 as well attached to the first-end plate 20, the first cartridge-support ring 50, the first valve opening 55, the first valve member 60 and the first spacers 70 are as well shifted by the assumed shift and become the second cartridge-support ring 50, the second valve opening 55, the second valve member 60 and second first spacers 70, when reading FIG. 5 on FIG. 12.

As shown in the presented example, the (second) gap 55 may be intersected by optional (second) spacers 70 in ring gap sections. In this sense the gap 55 may be considered as a (second) ring gap being optionally intersected by the optional spacers 70 into ring gap sections. The gap 55 may be a second valve opening 55 of a second valve. This second valve may be considered as the second valve of the "first and/or second valve" described in the above section "Summary of the invention" and hence the valve opening 55 may be considered as an example of the second valve opening and the corresponding valve member 61 of the second valve member of the above mentioned "first and/or second valve opening" and "first and/or second valve member" (as indicted above already by placing "(second)" in front of the respective terms. Thus, the second valve opening 55 may be located between the second cartridge-support ring 50 and the second-end plate 40 and may have all attributes of the (second) gap 55 as explained above. The second cartridge-support ring 50 may be configured to define a radial position of the second-end plate 40 in a fluid filter housing 100 (e.g. radially and/or axially as shown in FIG. 12). More generally, the second cartridge-support ring 50 may thus be configured to support the cartridge 10 in a fluid filter housing 100. This may be accomplished by at least one (second) abutment surface 54, which like in the presented example can be the peripheral surface 54 of the second cartridge-support ring 50 as indicated by "(second)" in front of abutment surface 54. Accordingly, the abutment surface 54 and the peripheral surface 54 of the second cartridge-support ring 50 can be referenced to as second abutment surface 54 and second peripheral surface 54.

Preferably, as in the presented example, the second abutment surface 54 may be configured as a sealing surface (e.g. as second sealing surface), configured to seal against an inner surface of a fluid filter housing 100, as shown in FIG. 12.

A first end 61 of the second valve member 60 may be attached to the second cartridge-support ring 50 and although FIG. 3 and FIG. 4 show details of first valves, the description of these figures may be read on the second valve as well, bearing in mind that the location of the valve is shifted. Beyond there is no necessary difference. The second valve member 60 may be hinged or elsewise movably supported such that a free second end 62 of the second valve member 60 (for short: second free second end 62) is movable between a second open position (similar to FIG.4, assume the first and second valves are at least essentially identical, which they may be but do not need to) and a second closed position (see Fig 12 and compare with FIG. 3).

In a preferred example, the second valve member 60 may be unitary with the second hinge. For example, the second hinge may be an elastic ring of the second valve member 60 (like in FIG. 3 and 4). Like in the depicted example, the entire second valve member 60 (including the hinge) may be a unitary piece made of an elastic polymer, i.e. of an elastomer, wherein an elastomer is a polymer that displays rubber-like elasticity (c.f. IUPAC definition of elastomer).

In the closed position of the second valve member 60, the free second end of the second valve member 60 (preferably sealingly) contacts a second valve seat 241 (similar to FIG. 4). The second valve seat may be considered as an example of the second valve seat of the "first and/or second valve seat" described above in the section "Summary of the invention". Like in the example of FIG. 1 to FIG 4, the second valve seat 241 may be a ring surface, but different from the example in FIG. 1 to FIG. 4, of the second-end plate's peripheral surface 24. In other words, the second valve seat 241 may be a portion of the second-end plate's peripheral surface 24. It is advantageous that the in closed position, the second valve member 60 closes the second valve opening 55 because one of the two ends 61, 62 (first end 61 and second end 62) of the second valve member 60 contacts the second cartridge-support ring 50 and the other the second -end plate 40, at least essentially sealingly. It is further advantageous that in the open position the second valve opening 55 is released, e.g. because a free second end 62 of the second valve member 60 may be moved away from the second valve seat 241.

Like in the example of FIG. 1 to FIG. 4, the inner free radius *dᵢ* of the second cartridge-support ring 50 may have at least essentially (within ±10%, less preferred within ±15%, even lees preferred within ±25%) the same or a larger diameter than the outer radius of the second-end plate 20. This enables to maximize the area of the second valve opening 55 and thus to reduce the pressure drop of fluid flowing through the valve.

As can be seen in FIG. 12, the filter cartridge 10 may be configured to be positioned in a fluid-filter housing 100. In this regard, the description of Fig. 2 may be read on FIG. 12 as well.

The fluid-filter housing may comprise a bypass duct 160. The bypass duct is at least essentially defined by the volume between the second side 42 of the second-end plate 40 and the housing cover 150.

The housing socket 110 may comprise an inlet 121 for receiving a fluid from a fluid source (e.g. an oil reservoir). The inlet 121 may be connected by an optional first duct 120 of the fluid filter housing 100 to the volume between the filter element 30 and the housing cover 150, as shown in FIG. 2 via a space 140 formed between the first side 21 of the first-end plate 20 and the housing socket 110. As can be seen, the first valve opening 55 may be located in the flow path of the fluid from the housing socket's inlet 121 to the peripheral surface 34 of the filter element 30. A fuid may hence flow from the housing socket's inlet 121 into the volume being delimited by the peripheral surface 34 of the filter element and the inner surface of the fluid filter housing 100 and by the first valve opening 55 and the second valve opening 55. If the fluid pressure differential between this volume and the bypass duct exceeds a threshold, the second valve member is shifted by the pressure differential into its open position and the fluid may flow via the second valve opening 55 into the bypass duct 160 and from there via the standpipe 180 to the fluid outlet 131 of fluid-filter housing 100. The pressure differential threshold can be adapted by changes in the design of the second valve and in particular by the elastic constant of the second valve member 60.

In case there exists a first valve member 60 and second valve member 60, wherein the first valve member 60 is the valve member 60 of first valve being configured as a backflow prevention valve, e.g. as shown in FIG. 1 to 12 and a second valve member 60 of a second valve as shown in FIG. 12 and 13, the pressure differential threshold for moving the the second valve member member 60 into its open position is preferably greater than the pressure differential threshold for opening the first valve, i.e. for shifting the first valve member 60 from its closed into its open position.

FIG. 13 shows a detail of yet another valve design. The detail is very similar to the details in FIG. 3 and 5 to 11. A difference is that the shown valve is associated to the rear-end plate, which in the example nomenclature used herein may be considered as the second-end plate 40. The second-end plate 40 supports by at least one spacer 70 a cartridge support ring 50, thereby defining a corresponding valve opening 55. In other words, the at least one spacer 70 bridges a gap 55 between the second-end plate 40 and the cartridge support ring 50. Axially extending protrusions 49 and 59 of the second-end plate 40 and the cartridge-support ring 50 provide an outward facing (with respect to the axis 2, c.f. FIG. 2 and 12) bearing surface for a valve member 60 and are thus the valve seat. In the depicted closed position the valve member 60 hence seals the gap 55, with is thus a valve opening 55. If the pressure difference between the gap 55 and the bypass duct 160 exceeds a threshold, the valve member may preferably elastically deform into its open position and thereby allows fluid to flow through the valve opening 55 into the bypass duct.

The valve design shown in FG.13 may as well (in addition or alternatively) be used at the front-end side of the fluid-filter cartridge 10, in which configuration it may be used as backflow prevention valve. In this case, the term second-plate 40 (or rear-end plate) as used above has to be replaced by first-end plate 20 (or front-end plate). And instead into the bypass duct 160, the fluid would flow be from the gap into the volume surrounding the filter element 30.

If the valve configuration of FIG. 13 is used as first valve and as second valve, i.e. as backflow prevention valve and as bypass valve, different pressure thresholds can be obtained by simply using different valve members 60. The first-end plate, the at least one first spacer and the first cartridge support ring, may be a unitary part and/or may be identical to the second-end plate 40, the at least one second spacer 70 and the second cartridge support ring 50. The number of different parts is thus reduced, providing for a reduction in manufacturing costs. Different pressure thresholds for the two valves can be obtained by simply using different valve members 60. For example, in the backflow-prevention valve a low pressure drop is preferred whereas the valve member of a bypass valve should open only if the above described threshold is exceeded. This can be obtained by using a first valve member that has a first preload towards its closed position and a second valve member having a second preload towards its closed position, wherein preferably the first preload is smaller than the second preload (assuming that the first valve member closes and opens the first valve opening and the second valve member closes and opens the second valve opening). Assuming the two valve members are elastic rings, the preload can be adjusted by the ring diameter of the unmounted (=unstretched) valve member. The smaller the unmounted ring diameter for a given material, cross section and valve seat diameter, the greater is the preload of the valve member towards its closed position once mounted as shown in FIG. 13.

### Deletions are no prejudice

In the course of the proceedings, claims, text passages, features and combinations of features may be deleted, be it simple by omission, explicit cancellation, striking, or in any other way. None of these deletions is a waiver to reintroduce the claims, text passages, features and combinations of features in the application or to future divisional applications. Deleted content of the application as initially filed is not abandoned. In other words, any deletion is without prejudice to the filing of one or more divisional application or usage of the deleted subject matter for any other purpose during prosecution of the present or any future divisional application. This paragraph may be deleted when preparing the text in which the examining division intends to grant a patent, but as well such deletion is without any prejudice to the filing of one or more divisional application or usage of the deleted subject matter for any other purpose during prosecution of the present or any future divisional application.

### List of reference numerals

- 10: filter cartridge
- 20: first-end plate
- 21: first side of the first-end plate 20
- 22: second side of the first-end plate 20
- 24: peripheral surface of the first-end plate 20
- 241: valve seat
- 25: through hole in first-end plate 20
- 28: protrusion / ring shaped protrusion
- 284: peripheral surface of protrusion 28

- 30: filter element
- 35: filter channel
- 38: support structure

- 40: second-end plate
- 41: first side of the second-end plate 40
- 42: second side of the second-end plate 40
- 44: peripheral surface of the second-end plate 40
- 45: through hole in second-end plate 40

- 50: cartridge-support ring
- 51: support element of the cartridge-support ring
- 54: peripheral surface, sealing surface, abutment surface of the cartridge-support ring / gasket portion / gasket
- 55: valve opening / gap between first-end plate 20 and cartridge-support ring 50
- 58: web / ring web
- 60: valve member
- 61: first end of valve member 60 (preferably an attached end)
- 62: second end of valve member 60 (preferably a free end)

- 70: spacer

- 100: fluid-filter housing
- 110: housing socket / socket
- 120: first duct
- 121: fluid inlet of socket
- 130: second duct
- 131: fluid outlet of socket
- 140: space between first-end plate and socket
- 150: filter housing cover / fluid-filter housing cover
- 180: standpipe

## Claims

1. A filter cartridge (10) configured for being removably inserted into a fluid-filter housing (100), wherein the filter cartridge (10) comprises at least a first-end plate (20), a filter element (30), a second-end plate (40) and a valve, wherein:
- the filter element (30) is sandwiched between the first-end plate (20) and the second-end plate (40), and
- the first-end plate (20) has a peripheral surface (24), and
- the filter element (30) surrounds a first fluid channel (35), wherein the first fluid channel (35) defines a longitudinal axis (2), and
- the valve comprises a valve opening (55) and a valve member (60), and
- the valve member (60) is movable between an open position and a closed position, wherein in the open position the valve opening (55) is released and in the closed position the valve opening (55) is blocked by the valve member (60),
**characterized in that**
- the filter cartridge (10) further comprises a cartridge-support ring (50), and **in that**
- the cartridge-support ring (50) is spaced from the first-end plate (20), thereby defining a gap (55) which is the valve opening (55).

2. A filter cartridge (10) according to claim 1, **characterized in that** the valve member (60) comprises at least a first first end (61) and at least a first second end (62) and **in that**
(i) the first first end (61) of the valve member (60) is attached to the first-end plate (20) and the first second end (62) of the valve member (60) contacts in a closed position the cartridge-support ring (50), and/or
(ii) the first first end (61) or a second first end (61) of the valve member (60) is attached to the cartridge-support ring (50) and the first second end (62) or a second second end (62) of the valve member (60) contacts in a closed position the first-end plate (20), and/or
(iii) the first first end (61) of the valve member (60) is attached to the first-end plate (20) and a second first end (61) of the valve member (60) is attached to the cartridge-support ring (50) and the first second end (62) of the valve member (60) and the second second end (40) of valve member (60) contact each other in the closed position.

3. A filter cartridge (10) according to claim 1 or 2, **characterized in that** the valve opening (55) is delimited by the peripheral surface (24) of the first-end plate (20) or an axially facing surface (21) of the first-end plate (20) and a first-end plate facing surface area of the cartridge-support ring (50).

4. A filter cartridge (10) according to one of claims 1 to 3,
**characterized in that** the cartridge-support ring (50) has an inner diameter *dᵢ*, and the first-end plate (20) has an outer diameter *dₐ* and **in that** the inner diameter *dᵢ* of the cartridge-support ring (50) is greater than or equal to the outer diameter *dₐ* of the first-end plate and/or greater than or equal to 50% of the outer diameter *dₐ* of the first-end plate (20).

5. A filter cartridge (10) according to one of claims 1 to 4,
**characterized in that** the cartridge-support ring (50) comprises and/or supports a gasket (54) configured to contact an inner surface of the fluid-filter housing (100) and/or configured for being clamped in a gap between a housing socket 110 and a housing cover 150.

6. A filter cartridge (10) according to claim 5, **characterized in that** the gasket (54) is unitary with and/or in contact with and/or supports the valve member (60).

7. A filter cartridge (10) according to one of claims 1 to 6,
**characterized in that** the cartridge-support ring (50) is attached by at least one spacer (70) to the first-end plate (20).

8. A filter cartridge (10) according to claim 7, **characterized in that** the valve member (60) abuts the at least one spacer (70) in the closed position of the valve member (60).

9. A filter cartridge (10) according to one of claims 1 to 8,
**characterized in that** the first fluid channel (35) extends from the first-end plate (20) to the second-end plate (40), and **in that** the first-end plate (20) and/or the second-end plate (40) have/has a through hole (25, 45) configured for providing a fluid communication of the first fluid channel (35) with a fluid duct (130) of the fluid-filter housing (100).

10. A kit or a fluid filter system comprising a fluid-filter housing (100) and a filter cartridge (10) of one of claims 1 to 9.
